## Europäisches Patentamt
## European Patent Office
## Office européen des brevets

(11) Publication number: **0 132 149**
**B1**

(12) **EUROPEAN PATENT SPECIFICATION**

(45) Date of publication of patent specification: **30.09.87**

(21) Application number: **84304867.9**

(22) Date of filing: **17.07.84**

(51) Int. Cl.⁴: **B 23 B 51/02**

(54) **Twist drill.**

(30) Priority: **19.07.83 JP 130314/83**

(43) Date of publication of application:
**23.01.85 Bulletin 85/04**

(45) Publication of the grant of the patent:
**30.09.87 Bulletin 87/40**

(84) Designated Contracting States:
**DE FR GB IT**

(56) References cited:
**US-A-2 778 252**

(73) Proprietor: **Kubota, Masao**
**22-7 Narimasu 2-chome**
**Itabashi-ku Tokyo (JP)**

(72) Inventor: **Kubota, Masao**
**22-7 Narimasu 2-chome**
**Itabashi-ku Tokyo (JP)**

(74) Representative: **Warden, John Christopher et al**
**R.G.C. Jenkins & Co. 12-15, Fetter Lane**
**London EC4A 1PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

## Background of the invention

### 1. Field of the invention

This invention relates to a twist drill having specific chisel edges at its point, more particularly to a twist drill subjected to less drilling thrust, offering good cutting quality in a cutting operation, and having sufficient strength and rigidity.

### 2. Description of the prior art

In conventional twist drills, various types of web thinning have been adopted for the drill points in order to reduce excess drilling thrust and to improve the cutting quality of chisel edges not having thinning cuts.

In the most common type of web thinning, the length of the thinning cut is one-half to three-fourths that of the cutting lip. The cut therefore extends far up the top end of the flute. The average distance of the thinning cut may be one-fourth to one-half of the drill diameter. It is also often recommended to extend the thinning out to the extreme edge in order to change the shape of the chip. In this case, a selectively positive or negative rake is rendered at the full length of the cutting edge.

Reconditioning of worn and dull drills takes too much time and skill and it is not that effective. Also, with web thinning, after regrinding the drill point, the troublesome thinning cut operation must be carefully repeated.

A self-thinned twist drill is known in U.S. Patent No. 2,778,252 to Oxford. This drill has an outer portion of the chisel edge line respectively at the drill point effective in cutting action, which portion extends from the inner corner of the main cutting lip to an intermediate point in the chisel edge line. The cutting effect at the outer chisel portion is achieved by a formation of an additional helical groove axially extended with the same lead of helix as that of the main cutting lip. The wall surface of the additional inner groove is defined as a rake surface having a positive rake angle efficient in cutting, and thus when the drill point is reground, the outer chisel portion as well as the main cutting lip appear simultaneously as effective cutting edges. However, the inner chisel portions adjacent to the center still remain and give obstructive effects near to the center, as before.

The object of this invention is to eliminate the above-mentioned disadvantages. The present invention aims to make available permanent chisel edges with an invariable and efficient rake surface, i.e., chisel edges which repeated regrinding of the drill point does not change the rake surface at all. By merely regrinding the point of a dull drill, the same or higher drilling effect can be obtained as with a drill having web thinning cuts. Therefore, troublesome thinning cut work can be eliminated.

According to the invention there is provided a twist drill in which with respect to an outer portion in each of the chisel edge lines at the drill point an additional inner helical groove permanently efficient in cutting is united to the original helical flute, characterized in that a cutting effect at an inner portion of each of the chisel edge lines adjacent to the center of the drill also is produced by formation of a hard built-up cutting edge, wherein with respect to the said inner portion a secondary additional inner or innermost helical groove wall surface having the same lead of helix as the original flute is formed in a secondary rake surface for the inner chisel portion, which groove is extended to the vicinity of the center on the clearance surface of the opposite cutting lip passing through the intermediate point dividing the outer and inner portions, a seating face suitable for creating the built-up cutting edge is provided with a narrow triangular region consisting of a primary rake surface of negative rake angle which is bordered by the inner portion and an intersecting curve between the additional innermost helical groove and the rearward clearance surface of the opposite main cutting lip.

## Brief description of the drawings

The invention will be better understood from the following description of preferred embodiments taken in connection with the accompanying drawings, in which:

Figure 1 is a plan view of the point of a two-flute drill, showing the configuration of cutting edges according to the embodiment;

Figure 2 is an enlarged side elevational view of the point shown in Figure 1;

Figure 3 is a partial cross-sectional view through point K in a chisel edge line, which view is included in a plane parallel to the axis of the drill, illustrating the formation of a secondary rake surface made to the chisel edge and a built-up edge created over a part of the relief surface of the opposite lip in drilling work; and

Figures 4 and 5 are views similar to those of Figures 1 and 2, respectively, wherein intersecting corners between the lip cutting edge and the chisel edge are shaped as chamfered lines.

## Description of the preferred embodiments

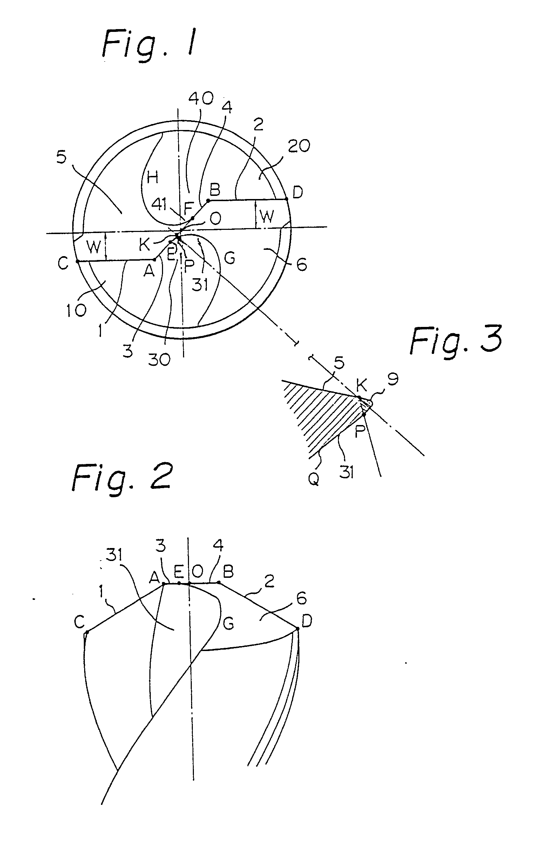

Referring to Figures 1 and 2, 0 indicates the center of the point of a two-flute drill. Main cutting edges or cutting lips 1 and 2 stretch along lines $\overline{AC}$ and $\overline{BD}$, respectively, extending from the chisel edge to the periphery of the drill. Chisel edges 3 and 4 are defined as approximately straight lines $\overline{AO}$ and $\overline{BO}$ respectively, extending from the center 0 to the inner corners A and B of each lip.

Numerals 5 and 6 respectively indicate relief surfaces ground with appropriate relief angles to the cutting lips 1 and 2. According to this invention, parts of the relief surfaces 5 and 6 also serve as seats of the built-up edge at the inner portion of the chisel edges 3 and 4.

The essential feature of the invention resides in a formation of an additional innermost helical groove consisting of a secondary rake surface having positive rake angles in respect to the inner chisel edge section $\overline{EO}$, $\overline{FO}$, in which the outer end of the innermost helical groove is smoothly connected to the inner end of the first additional inner helical groove. As a result, during operation, the hard built-up edge deposited over the first rake surface is continuously united to the secondary rake surface efficient in cutting, whereby at the subsequent repeated sharpening, an effective narrow seating surface for creating built-up edges each at almost all of the inner chisel edge is constantly obtainable.

It should be noted here that the interior helical grooves are provided with a positive rake surface to the chisel edge at the drill point, thereby enabling efficient cutting action of the chisel edge.

Referring to Figures 2 and 3, reference numeral 31 indicates a twisted wall surface forming the rake surface of the chisel edge 3. This forms a part of the interior helical groove 30 terminating in a curve AEG or BFH at the point of the drill. In contrast, in normal twist drills not having web thinning, the rake surface of the chisel edge 3 usually is formed by the relief surface 6 of the opposite lip 2 and, accordingly, has a negative or minus rake angle, resulting in adverse cutting.

Two different types of efficient rake surfaces are formed along the chisel edge line: Representing one are the outer chisel edge portions AE, BF extending toward the drill center 0 from the inner corners A, B of the lips 1, 2 through intermediate points E, F of the chisel edge. These outer portions AE and BF have wall surfaces 31, 41 of the helical grooves 31, 41 adjacent to the lip, which serve as a sole rake surface. Representing the other type are the inner chisel edges $\overline{EO}$, $\overline{FO}$ from the intermediate points E, F to the drill center 0. These portions have combined rake surfaces comprising narrow triangular regions for the relief surfaces 6, 5 of the opposite lips 2, 1 and part of the wall surfaces of the helical grooves 31, 41 separated by curved edges EG, FH from the region.

The cross-sectional view given in Figure 3 illustrates one section of the combined rake surfaces, including an optional point K in the inner chisel edge $\overline{EO}$. Line $\overline{KP}$ remains as the primary rake surface having a minus rake angle with regard to the rake surface 6. Line $\overline{PQ}$ is included in the twisted wall surface 31 having a positive rake angle.

If line $\overline{KP}$ is short enough, a built-up edge 9 with effective cutting action may be created over the region, thereby protecting the chisel edge from becoming dull. Returning to Figure 1, the greater part of the narrow region including line $\overline{KP}$ serves as a stable seating face for creating the hard built-up edge. Further, the built-up edge is smoothly connected to the secondary rake surface having the positive rake angle with an efficiently sharp cutting edge.

Since the chisel edge is given the above-mentioned specific rake surface, whenever the point of the drill becomes dull and the relief surface of the lips is reground, the predetermined accurate rake surface of the chisel edge is constantly obtained.

The provision of the above-mentioned chisel edge rake surface reduces the thickness of the web to some extent, but does not reduce the overall strength and rigidity of the drill that much since the radii of curvature in section rendered over the interior twisted wall surface is designed to be appropriately small.

On the other hand, as the chisel edge has efficient cutting characteristics and reduced drilling thrust, the drill can be designed for a larger amount of offset W of the cutting lip line and, thus, a greater length of the chisel edge. The design of lips having a larger offset W means an increase of the web thickness, resulting in greater strength and rigidity of the drill. An appropriate design can more than compensate for the reduction of strength and rigidity of the drill due to the partial removal of material around the web for the formation of the interior helical grooves.

Another advantage of the present invention relates to chip formation. During drilling process using normal twist drills, a long continuous chip often winds up around the drill, making chip disposal difficult. However, when using the drill according to the present invention, this problem is eliminated. Test results show that, even when drilling holes in ductile workpieces such as steel, the twist drill of the present invention produces chip fragments rather than long chips. As to the mechanism behind this fragmentation in actual cutting, it is believed that two different types of chips, one from the lips and the other from the chisel cutting edges, are produced. These are believed to flow in a slightly different direction, thereby interfering with each other and thereby fragmenting.

In contrast with most of today's twist drills with web-thinning, the thinning cut is limited to the chisel edge area at the web end of the drill in consideration of not decreasing the stiffness of the drill. Due to this, the present invention solves various problems around the chisel edge in one stroke. This is, the formation of interior groove walls for producing a permanent positive rake surface to the chisel edge occurs principally over the full length of the flute in length. In addition, the bottom of the groove is located near the axis of the web.

Generally, most twist drills are made with webs which slightly increase in thickness toward the shank. In the invention, if a large offset W of the lip is selected, it is not always necessary to provide such a tapered web. If the taper is still desired, however, the interior helical groove should be formed so as to have a twisted curving surface tangential to a slightly conical surface of the tapered web and so as to gradually increase the web thickness extending toward the shank.

The cutting edge lines of the lip and the chisel edge make an obtuse angle at the crossing corner. In order to prevent damage to the cutting edges, such as breakage of a sharp portion at the crossing corner, it is preferable that the crossing corner between the lip and the chisel edge be finished by rounding off or chamfering, as is the practice in the design of general machining tools. In that case, of course, the rake surface corresponding to the, for example, chamfered portion is defined as another twisted wall surface smoothly joined to both the lip and chisel edge wall surfaces in which the axial lead length of those helical grooves are all the same.

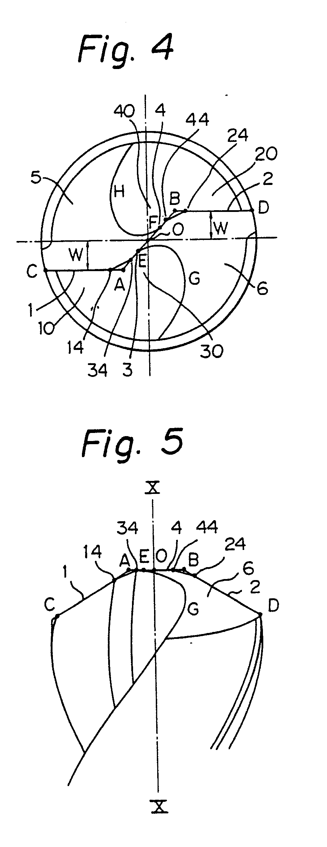

Figures 4 and 5 illustrate an embodiment of the joining corner connected by a chamfered portion having a comparatively larger width of chamfer. As shown in Figure 4, the chamfered portion is contoured by a straight line segment cutting off the corner between the lip line and the chisel edge line. That is to say, on the lower side of the horizontal axis, the portion stretching from point 14 in the lip line 1 to point 34 in the chisel edge line 3 and, on the upper side thereof, the portion stretching from point 24 to 44 function as intermediate effective cutting edges. The length of the chisel edge after chamfering then becomes smaller than the original length as shown in section $\overline{34}$, $\overline{44}$. In addition, as the chamfered portions 34—14 and 44—24 is inclined to the drill axis X-X, during drilling work, there is the advantage that the drill thrust pressure is decreased and the centripetal force is increased, resulting in increased stability of the axis of the twist drill.

With respect to the formation of the interior helical groove in the chisel edge, the grooves are preferably formed over the full length of the drill. However, if a larger strength is desired, they may be limited to the middle of the drill.

## Claim

A twist drill in which with respect to an outer portion in each of the chisel edge lines (AO, BO) at the drill point an additional inner helical groove (30, 40) permanently efficient in cutting is united to the original helical flute, characterized in that a cutting effect at an inner portion (EO, FO) of each of the chisel edge lines adjacent to the center (0) of the drill also is produced by formation of a hard built-up cutting edge (9), wherein with respect to the said inner portion (EO, FO) a secondary additional inner or innermost helical groove wall surface (31, 41) having the same lead of helix as the original flute is formed in a secondary rake surface for the inner chisel portion, which groove is extended to the vicinity of the center on the clearance surface of the opposite cutting lip passing through the intermediate point (E, F) dividing the outer and inner portions, a seating face (KPO) suitable for creating the built-up cutting edge (9) is provided with a narrow triangular region consisting of a primary rake surface (KP) of negative rake angle which is bordered by the inner portion (EO) and an intersecting curve between the additional innermost helical groove and the rearward clearance surface (6) of the opposite main cutting lip (2).

## Patentanspruch

Spiralbohrer, bei dem in bezug auf einen Außenabschnitt in (an) jeder der Meißelkantenlinien (AO, BO) an der Bohrerspitze eine zusätzliche, ständig für das Schneiden wirksame innere Spiralnut (30, 40) mit der ursprünglichen Spiralauskehlung oder -nut vereinigt ist, dadurch gekennzeichnet, daß eine Schneidwirkung an einem Innenabschnitt (EO, FO) jeder der Meißelkantenlinien im Bereich des Zentrums (0) des Bohrers auch durch Ausbildung einer harten aufgebauten oder aufgetragenen Schneidkante (9) hervorgebracht wird, wobei in bezug auf den Innenabschnitt (EO, FO) eine sekundäre zusätzliche innere oder innerste Spiralnutwandfläche (31, 41) derselben Spiralsteigung wie die ursprüngliche Auskehlung in einer sekundären Anstiegs- oder Schrägfläche für den inneren Meißelabschnitt ausgebildet ist, wobei diese Nut bis in die Nähe des Zentrums auf der Freischleiffläche der gegenüberliegenden Schneidlippe, die durch den die Außen- und Innenabschnitte teilenden Zwischenpunkt (E, F) verläuft, erweitert ist, eine für die Erzeugung der aufgebauten Schneidkante (9) geeignete Sitzfläche (KPO) mit einem schmalen dreieckigen Bereich versehen ist, bestehend aus einer primären Schrägfläche (KP) eines negativen Schrägungswinkels, die durch den Innenabschnitt (EO) und eine schneidende Kurve oder Krümmung zwischen der zusätzlichen innersten Spiralnut und der rückwärtigen Freischleiffläche (6) der gegenüberliegenden Hauptschneidlippe (2) begrenzt ist.

## Revendication

Foret hélicoïdal dans lequel, par rapport à une partie extérieure dans chacun des fils d'arêtes transversales (AO, BO) à la pointe du foret, une gorge hélicoïdale intérieure supplémentaire (30, 40), effectuant une coupe permanente, est adjointe à la gorge hélicoïdale initiale, caractérisée en ce que l'effet de coupe à la partie intérieure (EO, FO) de chacun des fils d'arêtes transversales adjacentes au centre 0 du foret est également produit par formation d'une arête de coupe dure rapportée (9), une surface de paroi 31, 41 de la gorge hélicoïdale intérieure ou placée le plus à l'intérieur, supplémentaire secondaire, ayant le même pas que la gorge initiale, est formée, par rapport à la partie intérieure (EO, FO), dans une surface de dépouille secondaire pour la partie transversale intérieure, cette gorge s'étendant jusqu'au voisinage du centre sur la surface de dégagement du tranchant opposé traversant le point intermédiaire (E, F) qui divise les parties extérieures et intérieure, une face d'appui (KPO) appropriée à créer l'arête de coupe rapportée neuve est munie d'une région triangulaire étroite constituée par une surface de dépouille primaire (KP) d'un angle de dépouille négatif qui est bordée par la partie intérieure (EO) et une courbe d'intersection entre la gorge hélicoïdale supplémentaire la plus intérieure et la surface de dégagement arrière (6) du tranchant principal opposé (2).

Fig. 1

Fig. 3

Fig. 2

# Fig. 4

# Fig. 5